# FASCICULE DE BREVET EUROPEEN

(11) **EP 4 204 331 B1**
(45) Date de publication et mention de la délivrance du brevet: **15.10.2025**
(21) Numéro de dépôt: 21773302.1
(22) Date de dépôt: 31.08.2021
(51) Int. Cl.: B65G 1/04, B65G 47/90

(54) **SYSTÈME DE STOCKAGE DE BACS COMPRENANT DES ROBOTS ÉQUIPÉS DE CROCHETS OU DE DOIGTS DE PRÉHENSION ET DE LEVAGE DE BACS ET PROCÉDÉ DE PRÉHENSION DE BACS CORRESPONDANT**
TABLARLAGERSYSTEM MIT ROBOTERN MIT HAKEN ODER FINGERN ZUM GREIFEN UND HEBEN VON TABLAREN UND ENTSPRECHENDES VERFAHREN ZUM GREIFEN VON TABLAREN
TRAY STORAGE SYSTEM COMPRISING ROBOTS EQUIPPED WITH HOOKS OR FINGERS FOR GRIPPING AND LIFTING TRAYS, AND CORRESPONDING METHOD FOR GRIPPING TRAYS

(30) Priorité: 31.08.2020 FR 2008857
(43) Date de publication de la demande: 05.07.2023
(73) Titulaire: Exotec Product France, 59170 Croix (FR)
(72) Inventeur: CHATAIN, Marc, 68230 ZIMMERBACH (FR); MOULIN, Romain, 59800 LILLE (FR); HEITZ, Renaud, 59650 VILLENEUVE D'ASCQ (FR)
(74) Mandataire: Plasseraud IP
(86) Numéro de dépôt international: PCT/EP2021/074059
(87) Numéro de publication internationale: WO 2022/043589

(56) Documents cités:
- WO-A1-2013/167907
- CN-A- 110 329 696
- US-A- 4 815 781

## Description

### 1. Domaine de l'invention

Le domaine de l'invention est celui de la logistique en entrepôt, et en particulier du stockage et de la restitution automatique de produits.

Plus précisément, l'invention concerne un système de stockage et de restitution de produits.

L'invention trouve notamment une application dans le stockage de produits en entrepôt.

### 2. Etat de la technique

On connait, par exemple du document NO317366 B1, des structures automatisées de stockage de bacs contenant des produits dans une grille tridimensionnelle dans laquelle les bacs sont stockés les uns au-dessus des autres dans des colonnes sur lesquelles on a fixé des rails pour permettre la circulation de robots permettant de prélever ou de déposer un bac dans une colonne et le transporter sur le réseau de rails en forme de grille vers une autre colonne de stockage ou un point de collecte, où par exemple le bac est transféré sur un convoyeur ou dans un ascenseur.

Pour prélever un bac dans une colonne, le document NO317366 B1 propose de mettre en œuvre une plateforme suspendue par des câbles pouvant se déplacer verticalement, équipée de clips de préhension permettant de saisir le bac placé au sommet de l'empilement de bacs stocké dans la colonne par sa partie supérieure.

Un inconvénient de cette technique connue est qu'elle ne permet de prélever qu'un bac à la fois dans une colonne de stockage. Cette limitation est particulièrement préjudiciable lorsqu'on souhaite prélever un bac situé sous plusieurs bacs dans un empilement. Il est alors nécessaire de retirer un à un chacun des bacs posés au-dessus du bac pour pouvoir accéder au bac à prélever et de les stocker temporairement hors de la colonne, ce qui est allonge significativement la durée globale nécessaire pour prélever le bac cible et peut provoquer des difficultés de circulation des robots sur la grille du fait de la présence des bacs qui ont été retirés pour accéder au bac cible et qui sont en attente d'être redéposés dans la colonne. De plus, cette technique connue ne permet pas de prélever plusieurs bacs cibles empilés les uns sur les autres en une seule opération.

Afin de pallier cet inconvénient, on a pensé à mettre en œuvre un cadre ou des bras pouvant se glisser le long d'un empilement de bacs, équipé(s) de griffes pour pouvoir saisir un bac de l'empilement se trouvant sous un ou plusieurs bacs et soulever ce bac et les bacs posés au-dessus de lui dans un même mouvement.

Le document EP 0 767 113 A2 décrit un système selon le préambule de la revendication 1, un procédé selon le préambule de la revendication 12 et un robot équipé d'un tel cadre de levage dont le cadre a la forme d'un tube rectangulaire. Un inconvénient de ce cadre en forme de tube est que sa hauteur correspond à la hauteur de l'empilement de bac maximal pouvant être stocké dans une colonne, afin de pouvoir prélever cet empilement maximal une seule opération, ce qui restreint son utilisation dans un entrepôt où la hauteur peut ne pas être suffisante.

Le document WO 2013/167907 A1 décrit également un robot muni de bras équipés de pinces permettant de prélever un empilement de plusieurs bacs dans une colonne.

Un inconvénient de ces techniques connues de cadre ou de bras équipés de pinces est qu'il existe un risque de défaillance des systèmes de commande hydrauliques, pneumatiques ou électrique permettant d'actionner les pinces, ce qui nécessite une intervention pour réparer le robot et perturbe, voire nécessite une mise à l'arrêt, de l'installation de stockage.

Un autre inconvénient de ces techniques connues est qu'elles sont complexes à mettre en œuvre et nécessitent une maintenance importante.

### 3. Objectifs de l'invention

L'invention a donc notamment pour objectif de pallier les inconvénients de l'état de la technique cités ci-dessus.

Plus précisément l'invention a pour objectif de fournir une technique de stockage et de restitution de produits qui permette un déstockage rapide des produits et qui soit fiable.

Un autre objectif de l'invention est de fournir une telle technique qui soit simple à mettre en œuvre, et d'un coût de revient réduit.

Encore un objectif de l'invention est de fournir une telle technique qui permette un stockage des produits dans des bacs de différentes hauteurs.

### 4. Exposé de l'invention

Ces objectifs, ainsi que d'autres qui apparaitront par la suite sont atteints à l'aide d'un système de stockage et de restitution automatique de produits comprenant :
- une pluralité de bacs destinés à recevoir lesdits produits ;
- une installation de stockage desdits bacs comprenant une pluralité de colonnes de stockage agencés suivant une grille et configurées pour recevoir un empilement vertical de bacs de ladite pluralité de bacs, et
- au moins un robot opérant au-dessus de ladite grille, apte à transporter lesdits bacs et à prélever et déposer lesdits bacs dans lesdites colonnes, ledit robot comprenant des moyens de préhension et de levage d'au moins un bac comprenant un support mobile, tel qu'un cadre ou un bras, configuré de sorte à pouvoir coulisser verticalement autour desdits bacs.

Selon l'invention, lesdits moyens de préhension et de levage d'au moins un bac comprennent au moins un élément s'étendant sensiblement verticalement, monté mobile par rapport audit support entre :
- une position d'équilibre stable dans laquelle l'extrémité inférieure dudit élément n'est soumis à l'action d'aucune poussée horizontale ou la résultante des forces de poussée horizontales s'exerçant sur l'extrémité inférieure dudit élément est nulle ; et
- au moins une position hors équilibre, dans laquelle la résultante des forces de poussée horizontales s'exerçant sur l'extrémité inférieure dudit élément est non nulle, et l'extrémité inférieure dudit élément est écartée d'un côté ou de l'autre de sa position dans ladite position d'équilibre.
et lesdits bacs présentent au moins une patte présentant un logement de verrouillage dudit élément mobile dans ladite position d'équilibre stable, sensiblement tourné vers le bas et une portion inclinée sensiblement tournée vers le haut permettant de repousser l'extrémité inférieure dudit élément mobile vers l'extérieur dudit bac, dans une desdites positions hors équilibre, lorsque ledit support se déplace vers le bas.

L'invention propose ainsi, de façon inédite et astucieuse, de mettre en œuvre un support sur lequel est monté au moins un élément mobile par rapport à celui-ci et pouvant être écarté d'une position d'équilibre stable pour prélever un empilement de bacs dans une colonne de stockage et le lever. Cette solution technique est particulièrement avantageuse car, outre sa simplicité de mise en œuvre et son efficacité, elle s'avère très fiable et ne nécessite pas de maintenance.

Dans le cadre de l'invention, le support peut prendre, par exemple, la forme d'un châssis, d'une ou plusieurs plaques, d'un cadre pouvant entourer un bac sur au moins trois côtés ou d'un bras. Ce support peut être monobloc ou formé de plusieurs parties disjointes.

Il convient par ailleurs de noter que le logement de verrouillage peut prendre toute forme creuse, et par exemple une forme concave ou une forme de triangle en creux, ..., sans sortir du cadre de l'invention.

Dans un mode de réalisation avantageux de l'invention, ledit élément mobile est un crochet destiné à pendre à partir dudit support, monté pivotant autour d'un axe par rapport audit support.

Dans un autre mode de réalisation avantageux de l'invention, ledit élément mobile est un doigt guidé en translation dans une coulisse horizontale et coopérant avec un ou plusieurs ressorts de rappel dans ladite position d'équilibre stable

Dans des modes de réalisation particuliers de l'invention, il peut être envisagé que lesdits moyens de préhension et de levage d'au moins un bac comprennent deux ou trois éléments mobiles, et que lesdites pattes présentent deux ou trois pattes, lesdites pattes étant placées les unes par rapport aux autres de sorte que lorsque ledit support se déplace autour d'un bac ou d'un empilement de bacs chacun desdits éléments mobiles est sensiblement en vis-à-vis d'une desdites pattes du bac ou des bacs de l'empilement.

Dans un mode de réalisation particulier de l'invention, lesdits moyens de préhension et de levage d'au moins un bac comprennent quatre éléments mobiles et lesdites pattes présentent quatre pattes, lesdites pattes étant placées les unes par rapport aux autres de sorte que lorsque ledit support se déplace autour d'un bac ou d'un empilement de bacs chacun desdits éléments mobiles est sensiblement en vis-à-vis d'une desdites pattes du bac ou des bacs de l'empilement.

Selon un aspect particulier de l'invention, ledit élément mobile est monté sensiblement à une extrémité ou à un coin dudit support.

Dans des modes de réalisation avantageux de l'invention dans lesquels lesdits moyens de préhension et de levage d'au moins un bac comprennent plusieurs éléments mobiles, lesdits éléments sont montés chacun sensiblement à une extrémité ou à un coin différent dudit support.

Dans un mode de réalisation avantageux de l'invention, ladite patte de verrouillage est formée monobloc avec lesdits bacs.

Dans un mode de réalisation particulier de l'invention, ledit crochet est formé d'une tige présentant un ergot faisant saillie sur un côté sensiblement à l'extrémité libre de ladite tige.

Selon un aspect particulier de l'invention, ladite portion inclinée comprend un plan incliné.

Selon un mode de réalisation particulier de l'invention, ledit logement de verrouillage présente une courbure en forme d'une branche d'hyperbole, de parabole ou d'une ellipse tronquée.

Avantageusement, lesdits bacs présentent des butées de guidage en vis-à-vis desdits logement de verrouillage destinées à destinées à repousser ledit élément mobile contre ledit logement de verrouillage.

Dans des modes de réalisation particuliers de l'invention où lesdits moyens de préhension et de levage d'au moins un bac comprennent un seul élément mobile, il peut être prévu de mettre en œuvre des glissières, par exemple fixées ou formées sur les montants, pour guider les coins des bacs. On peut également prévoir par ailleurs de solidariser ou former la patte sur la partie inférieure des bacs.

Dans un mode de réalisation particulier de l'invention, lesdits moyens de préhension et de levage comprennent au moins une crémaillère ou une pluralité de câbles solidarisés audit support et des moyens d'actionnement de ladite crémaillère ou desdits câbles pour lever ou abaisser ledit support.

De façon avantageuse, le châssis dudit robot présente une ouverture permettant le passage dudit support au travers dudit châssis pour pouvoir soulever un bac ou un empilement de bac du dessus dudit châssis ou vice versa pour déposer un bac ou un empilement dans une colonne sous ledit robot au travers de ladite ouverture.

L'invention concerne également un procédé de préhension par un robot d'un empilement de bacs dans une colonne de stockage d'une installation de stockage comprenant une pluralité de colonnes de stockage agencées suivant une grille, ledit robot opérant au-dessus de ladite grille et comprenant des moyens de préhension et de levage d'au moins un bac comprenant un support mobile configuré de sorte à pouvoir coulisser verticalement autour desdits bacs et au moins un élément mobile par rapport audit support, et de préférence quatre éléments mobiles par rapport audit support, entre :
- une position d'équilibre stable dans laquelle l'extrémité inférieure dudit élément mobile n'est soumis à l'action d'aucune poussée horizontale ou la résultante des forces de poussée horizontales s'exerçant sur l'extrémité inférieure dudit élément est nulle ; et
au moins une position hors équilibre, dans laquelle la résultante des forces de poussée horizontales s'exerçant sur l'extrémité inférieure dudit élément mobile est non nulle, et l'extrémité inférieure dudit élément est écartée d'un côté ou de l'autre de sa position dans ladite position d'équilibre,
lesdits bacs dudit empilement présentant au moins une patte, et de préférence quatre pattes, présentant un logement de verrouillage dudit élément mobile sensiblement tourné vers le bas et une portion inclinée sensiblement tournée vers le haut permettant de repousser l'extrémité libre dudit élément mobile vers l'extérieur dudit bac lorsque ledit support se déplace vers le bas.

On notera que dans le cadre de l'invention, l'empilement de bacs peut être aussi bien constitué de l'ensemble des bacs de la pile de bacs stockés dans la colonne que seulement d'une partie supérieure de la pile de bacs stockés dans la colonne.

Selon l'invention un tel procédé comprend les étapes suivantes :
- déplacement dudit support autour vers le bas autour dudit empilement jusqu'à une hauteur au niveau du bac situé au bas de l'empilement où ledit élément mobile est engagée dans ledit logement de verrouillage de ladite patte du bac situé au bas de l'empilement ;
- à partir de ladite hauteur, déplacement dudit support vers le haut jusqu'au niveau supérieur de ladite colonne, entrainant le soulèvement dudit empilement et sa sortie de ladite colonne.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- la figure 1 est une vue en perspective d'un exemple de mode de réalisation d'un système de stockage et de restitution de produits selon l'invention ;
- la figure 2 est une vue d'un robot du système présenté en référence à la figure 1 positionné au-dessus d'une colonne pour prélever un empilement de bacs ;
- la figure 3 est une vue de détail en perspective d'un cadre équipé de crochets d'un robot du système présenté en référence à la figure 1, représenté seul ;
- la figure 4 est une vue en perspective d'un bac du système présenté en référence à la figure 1, représenté seul ;
- la figure 5 illustre une étape du prélèvement d'un empilement de bacs par un robot du système présenté en référence à la figure 1, lors de la descente du cadre actionnée par le robot ;
- la figure 6 illustre une autre étape du prélèvement d'un empilement de bacs par un robot du système présenté en référence à la figure 1, lors de la descente du cadre actionnée par le robot ;
- la figure 7 illustre encore une autre étape du prélèvement d'un empilement de bacs par un robot du système présenté en référence à la figure 1, lors de la remontée du cadre et après que l'ergot des crochets a dépassé l'extrémité inférieur du plan incliné des pattes ;
- la figure 8 illustre une autre étape du prélèvement d'un empilement de bacs par un robot du système présenté en référence à la figure 1, dans laquelle le cadre du robot soulève l'empilement de bacs ;
- la figure 9 illustre une étape de la dépose d'un empilement de bacs dans une colonne, dans laquelle les crochets se désolidarisent de l'empilement de bacs ;
- la figure 10 illustre une autre étape de la dépose d'un empilement de bacs dans une colonne, dans laquelle le cadre du robot remonte le long de l'empilement de bacs ;
- la figure 11 est une représentation d'un autre mode de réalisation d'un cadre équipant un robot d'un système selon l'invention.

### 5. Description détaillée de l'invention

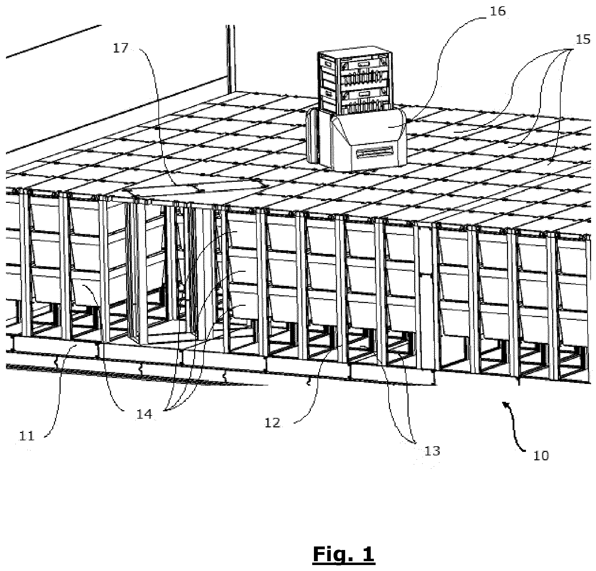

La figure 1 illustre, dans une vue en perspective, un exemple de système automatisé de stockage et de restitution de produits selon l'invention mis en œuvre au sein d'un entrepôt.

Ce système 10 comprend une installation de stockage 11 formée de montants 12 disposés selon le plan d'une grille, délimitant des colonnes de stockage 13, ou cellules, juxtaposées permettant de stocker des bacs 14 empilés les uns sur les autres.

Dans ce mode de réalisation particulier de l'invention, des capots 15 obturent l'ouverture supérieure des colonnes 13. Lorsqu'ils sont basculés à plat, ils reposent sur des poutres et des traverses horizontales reliant les extrémités supérieures des montants 12 dans le sens longitudinal et dans le sens transversal et forment une plateforme de roulage pour des robots autoguidés 16 assurant le transport des bacs et permettant de déposer ou de prélever un ou plusieurs bacs dans une colonne.

Ces capots 15 sont par ailleurs montés pivotants pour permettre d'accéder aux bacs stockés sous ceux-ci dans une colonne. Ce sont les robots 16 qui permettent de basculer ces capots 15 à la verticale en poussant ou en tirant sur l'extrémité libre des capots.

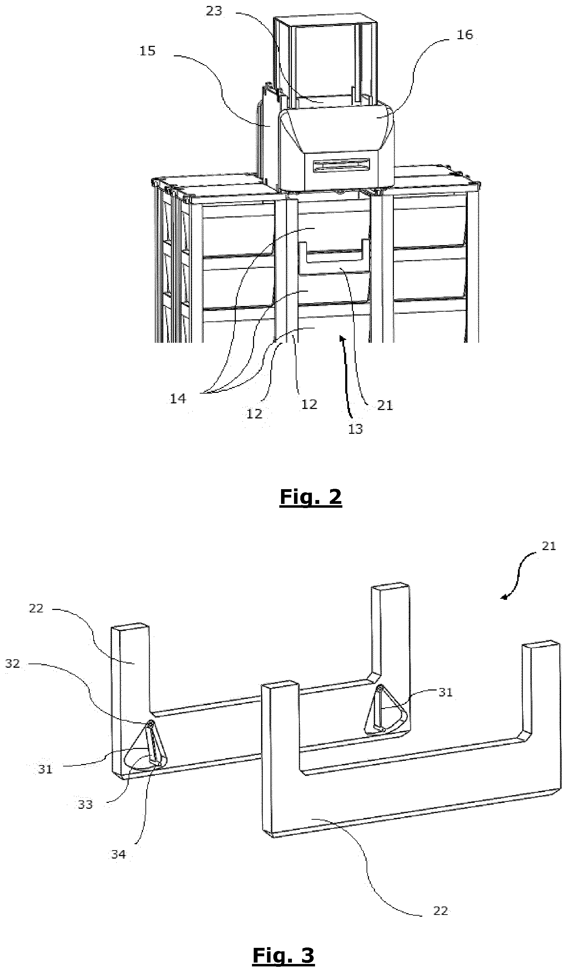

La figure 2 illustre un robot 16 positionné au-dessus d'une colonne 13 pour prélever un empilement de bacs 14 dans une colonne 13, après avoir basculé le capot 15 obturant la colonne 13 à la verticale.

Pour prélever cet empilement de bacs, ce robot 16 a actionné la descente d'un cadre 21 dans la colonne 13. Ce cadre 21 présente une ouverture interne présentant une largeur supérieure à la largeur extérieure des bacs 14, ce qui lui permet de se glisser autour des bacs 14.

Le cadre 21 est dans ce mode de réalisation particulier de l'invention fixé à des crémaillères actionnées par des pignons motorisés (non représentés sur la figure 2). La rotation des pignons dans un sens ou dans l'autre entraine les crémaillères vers le bas ou vers le haut, ce qui permet de faire coulisser le cadre 21 verticalement dans la colonne 13 autour des bacs 14.

Dans ce mode de réalisation particulier de l'invention, le cadre 21 est formé de deux plaques verticales 22 en « U » en vis-à-vis, comme on peut le voir sur la figure 3 où le cadre 21 est représenté seul.

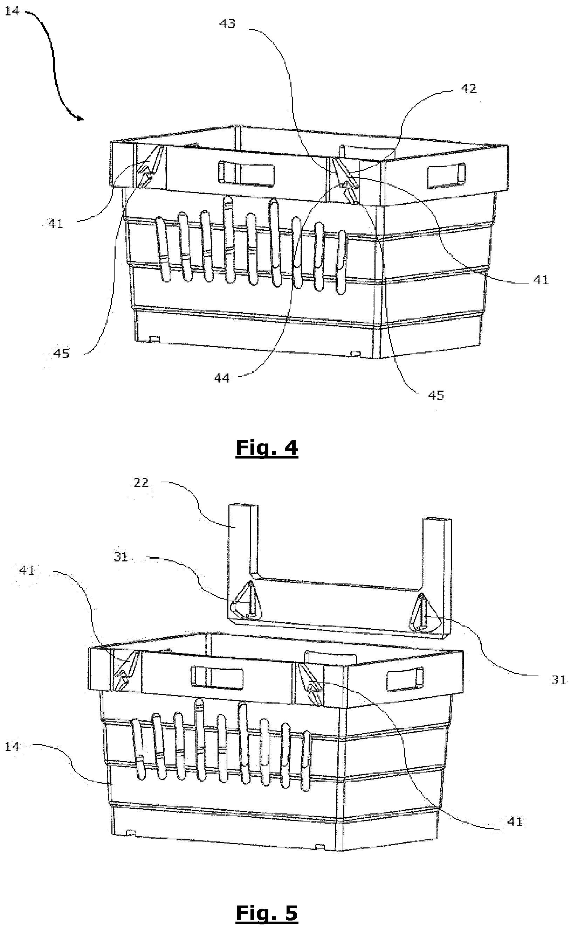

Quatre crochets 31 sont montés pivotants aux quatre coins du cadre 21 autour d'un axe transversal 32, en-dessous duquel ils pendent. Ces crochets 31 sont destinés à coopérer avec des pattes 41 formées monoblocs avec les bacs 14, dont on peut voir une illustration sur la figure 4, qui est une vue en perspective d'un bac isolé de forme extérieure sensiblement parallélépipédique. Ces crochets 31 présentent un corps en forme de tige 33 à l'extrémité libre de laquelle un ergot 34 fait saillie à angle droit et s'étend parallèlement à l'axe de rotation 32 du crochet 31.

Comme on peut le voir sur la figure 4, les pattes 41 sont formées en saillie sur le bord supérieur des faces latérales de plus grande longueur du bac 14, à proximité des coins supérieurs de celui-ci. De formes identiques, les pattes 41 formées sur une même face sont orientées dans des directions opposées et sont symétriques par rapport à un plan transversal du bac 14.

Ces pattes 41 présentent en partie supérieure, dans leur épaisseur, deux plans inclinés 42 et 43 se rejoignant en pointe 46 qui sont reliés en partie inférieure par un logement de verrouillage 44 incurvé, tourné vers le bas, dont la section est en forme de branche d'hyperboloïde. Il convient par ailleurs de noter que le plan incliné supérieur 42 est tourné vers le haut.

Une languette 45 sensiblement de même épaisseur que la patte 41 est par ailleurs formée en saillie sur le contour supérieur du bac 14, sous le logement de verrouillage 44. Cette languette 45 forme une butée de guidage qui permet de repousser l'extrémité libre des crochets 31 du cadre 21 contre le logement de verrouillage 44 lorsque celle-ci se trouve sensiblement à hauteur du logement de verrouillage 44 des pattes d'un bac 14.

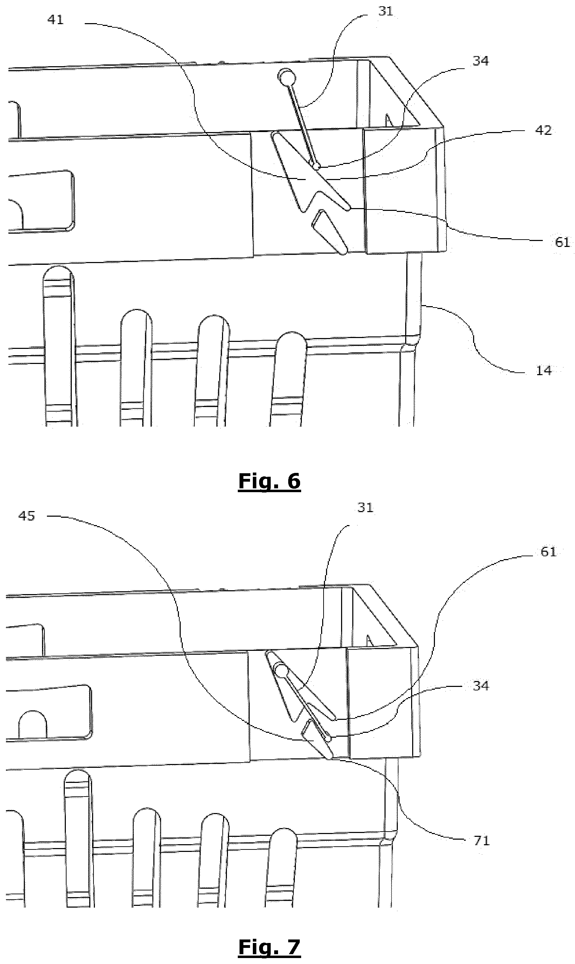

On a illustré sur les figures 5 à 8 différentes étapes du prélèvement d'un empilement de bacs dans une colonne de stockage 13 par un robot 16 positionné au-dessus de la colonne 13. Par souci de lisibilité, seuls une patte 41 d'un bac 14 et un crochet 31 sont représentés sur les figures 6 à 8.

Comme on peut le voir sur la figure 5, dans une vue de détail où seule une plaque 22 du cadre 21 est représentée, lorsque le cadre 21 commence à descendre dans la colonne de stockage, les crochets 31 pendent alors verticalement au-dessus des pattes 41 du bac 14 placé au sommet de la pile de bacs à prélever.

Lorsque le cadre continue sa descente et que l'ergot 34 à l'extrémité libre des crochets 31 atteint les pattes 41, celui-ci glisse progressivement sur le plan incliné 42 (voir la figure 6), ce qui repousse l'extrémité libre du crochet 31 vers l'extérieur du bac et entraine un basculement du crochet 31 vers le haut.

Lorsque le cadre 21 poursuit sa descente et que l'ergot 34 passe sous l'extrémité inférieure 61 du plan incliné 42, le crochet 31 tend à rebasculer dans une position verticale et vient tout d'abord s'appuyer sur la languette 45 (voir la figure 7), puis lorsque l'ergot passe sous l'extrémité inférieur 71 de la languette 45, il reprend une position verticale. Si le cadre 21 poursuit à nouveau sa descente, l'ergot 34 va venir en butée sur une patte 41 du bac suivant dans la pile et sera progressivement écarté vers l'extérieur par la patte 41 de ce bac et ainsi de suite.

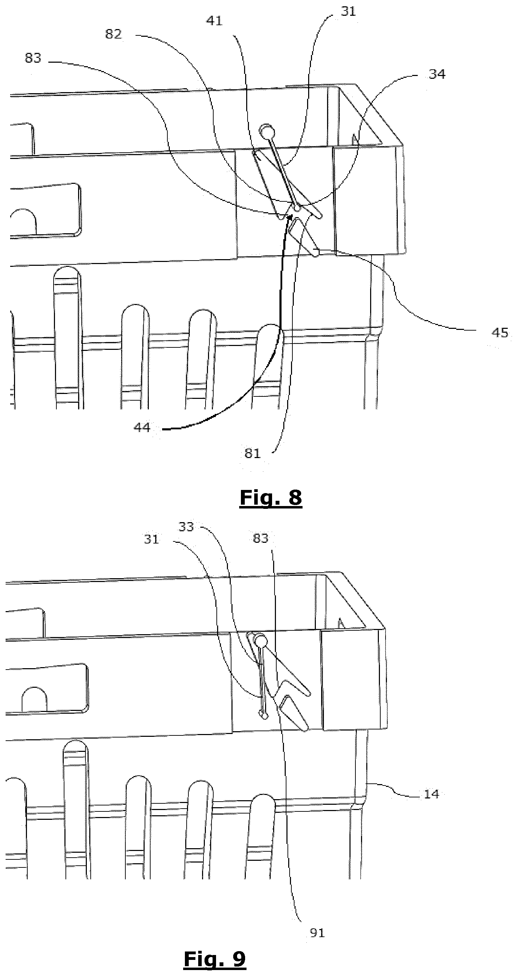

Si au contraire, on commande la remontée du cadre 21, immédiatement après que l'ergot 34 a dépassé l'extrémité inférieure 61 du plan incliné 42, l'ergot 34 va être repoussé par la languette 45 contre le profil 81 du logement de verrouillage 44 le plus à l'extérieur et glisser progressivement le long de celui-ci. Il convient par ailleurs de noter que dans ce mode de réalisation particulier de l'invention, la languette 45 permet par ailleurs de maintenir le crochet 31 incliné et basculé vers le haut. Lorsque le cadre 21 poursuit sa remontée et que l'ergot 34 se positionne au point le plus haut 82 du logement de verrouillage 44 (voir la figure 8), le crochet 31 soulève alors le bac 14 avec lequel il est en prise et les bacs posés au-dessus de lui, ce qui permet de remonter cet empilement de bacs jusqu'au niveau de la zone de circulation des robots, au-dessus de la colonne de stockage. On notera qu'une ouverture 23 est prévue dans le châssis du robot pour laisser le passage à l'empilement de bacs, lorsque celui-ci est remonté à l'aide du cadre 21.

Le robot 16 peut alors reculer 15 pour reposer le capot au-dessus de la colonne et se diriger vers une nouvelle colonne 13 où il a reçu des instructions de déposer l'empilement de bac ou encore vers une colonne de dépose 17, dans laquelle l'empilement de bacs 14 est descendu en actionnant le déplacement du cadre 21 et déposé sur un ascenseur (non représenté sur la figure 1) situé à la base de la colonne de dépose 17 pour être acheminé vers un poste de livraison.

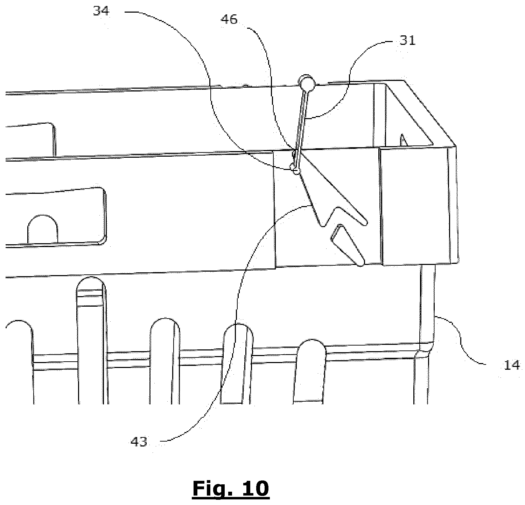

Les figures 9 et 10 illustrent les étapes de dépose d'un empilement de bacs, qui a été prélevé par un robot dans une colonne, dans une autre colonne de stockage.

Après avoir basculé à la verticale le capot 15 recouvrant la colonne de stockage dans laquelle l'empilement de bacs doit être déposé, le robot, qui est positionné au-dessus de cette colonne de stockage, actionne la descente du cadre 21 soutenant l'empilement de bacs 14. Lors de cette première étape, les crochets 31 sont verrouillés dans les pattes 41 du bac inférieur de l'empilement, dans la position illustrée sur la figure 8.

Lorsque le bac inférieur de l'empilement de bacs touche le fond de la colonne 13 ou vient au contact d'une pile de bacs déjà stockée dans la colonne, le cadre 21 est à nouveau déplacé vers le bas pour pouvoir dégager les crochets 31 des pattes 41 du bac inférieur de l'empilement. L'ergot 34 qui était positionné au point haut 82 du logement de verrouillage glisse alors progressivement vers le bas le long du profil intérieur 83 du logement de verrouillage 44.

Dans ce mode de réalisation particulier de l'invention, il convient de noter qu'un ressort de rappel, ou une lame ressort, (non représentée sur les figures) peut être monté sur l'axe de rotation des crochets pour faciliter le retour des crochets 31 dans une position verticale et les y maintenir.

Lorsque le cadre 21 est suffisamment descendu et que l'ergot 34 sort du logement de verrouillage 44, le crochet 31 retrouve une position verticale (voir la figure 9). Le robot 16 peut alors actionner la relevée du cadre 21. L'ergot 34 remonte alors le long de la patte 41 en glissant contre le plan incliné inférieur 43 de la patte 41 (voir la figure 10), qui repousse le crochet 31 vers l'intérieur du bac 41 tout en le faisant basculer vers le haut, jusqu'à ce qu'il atteigne la pointe supérieure 46 de la patte 41. Dans ce mode de réalisation particulier de l'invention, il convient de noter que lorsque l'ergot 34 passe sous l'extrémité intérieure 91 du profil intérieur 83 du logement de verrouillage 44, la tige 33 du crochet 31 se trouve dans une position verticale.

Le cadre 21 poursuit alors sa remontée et l'ergot 34 se détache de la patte 41, ce qui permet au crochet 31 de retrouver une position verticale, jusqu'à ce qu'il rencontre la patte 41 du bac surmontant le bac précédent et soit à nouveau repoussé vers l'intérieur et ainsi de suite jusqu'à ce que le cadre 21 sorte de la colonne 13 et que le robot 16 puisse à nouveau se déplacer sur la grille.

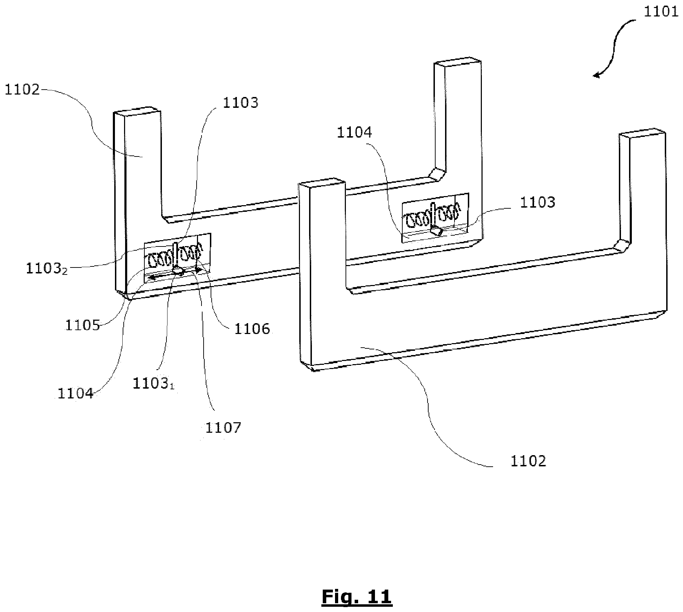

On a représenté sur la figure 11, une variante de mise en œuvre d'un cadre 1101 permettant de prélever des bacs.

Ce cadre 1101 est formé de deux plaques verticales 1102 en « U » en vis-à-vis, équipées chacune de deux doigts 1103 mobiles sensiblement au niveau de leurs coins, dont la tête 1103₁ fait saillie hors des plaques 1102 et est guidée en translation dans une coulisse 1104 orientée dans les plaques 1102 et orientée selon la direction horizontale (représentée par la double flèche 1107 sur la figure 11).

Le corps interne 1103₂ des doigts 1103 est monté entre deux ressorts de rappel sensiblement identiques 1105 et 1106 disposés de chaque côté de celui-ci. Ces ressorts tendent à ramener les doigts 1103 dans une position d'équilibre stable coïncidant sensiblement avec le centre de la coulisse 1104, lorsque les doigts sont écartés de leur position d'équilibre en étant poussés d'un côté ou de l'autre du centre de la coulisse 1104.

Ces doigts sont destinés à coopérer avec des pattes formées sur les bacs 14, pour permettre de prélever un ou plusieurs bacs avec le cadre 1101.

## Revendications

1. Système (10) de stockage et de restitution automatique de produits comprenant :
- une pluralité de bacs (14) destinés à recevoir lesdits produits ;
- une installation de stockage desdits bacs (11) comprenant une pluralité de colonnes de stockage (13) agencés suivant une grille et configurées pour recevoir un empilement vertical de bacs de ladite pluralité de bacs, et
- au moins un robot (16) opérant au-dessus de ladite grille, apte à transporter lesdits bacs et à prélever et déposer lesdits bacs dans lesdites colonnes, ledit robot comprenant des moyens de préhension et de levage d'au moins un bac comprenant un support mobile, tel qu'un cadre (21 ; 1101) ou un bras, configuré de sorte à pouvoir coulisser verticalement autour desdits bacs, lesdits moyens de préhension et de levage d'au moins un bac comprenant au moins un élément (31 ; 1103) s'étendant sensiblement verticalement, monté mobile par rapport audit support entre :
- une position d'équilibre stable dans laquelle l'extrémité inférieure dudit élément n'est soumis à l'action d'aucune poussée horizontale ou la résultante des forces de poussée horizontales s'exerçant sur l'extrémité inférieure dudit élément est nulle ; et
- au moins une position hors équilibre, dans laquelle la résultante des forces de poussée horizontales s'exerçant sur l'extrémité inférieure dudit élément est non nulle, et l'extrémité inférieure dudit élément est écartée d'un côté ou de l'autre de sa position dans ladite position d'équilibre,
**caractérisé en ce que** lesdits bacs présentent au moins une patte (41) présentant un logement de verrouillage (44) dudit élément mobile dans ladite position d'équilibre stable, sensiblement tourné vers le bas et une portion inclinée sensiblement tournée vers le haut permettant de repousser l'extrémité inférieure dudit élément mobile vers l'extérieur dudit bac, dans une desdites positions hors équilibre, lorsque ledit support se déplace vers le bas.

2. Système selon la revendication 1, **caractérisé en ce que** ledit élément mobile est un crochet (31) destiné à pendre à partir dudit support, monté pivotant autour d'un axe (32) par rapport audit support.

3. Système selon la revendication 1, **caractérisé en ce que** ledit élément mobile est un doigt (1103) guidé en translation dans une coulisse horizontale et coopérant avec un ou plusieurs ressorts de rappel dans ladite position d'équilibre stable.

4. Système selon la revendication 2, **caractérisé en ce que** lesdits moyens de préhension et de levage d'au moins un bac comprennent quatre éléments mobiles par rapport audit support et lesdites pattes (41) présentent quatre pattes, lesdites pattes étant placées les unes par rapport aux autres de sorte que lorsque ledit support se déplace autour d'un bac ou d'un empilement de bacs chacun desdits éléments mobiles est sensiblement en vis-à-vis d'une desdites pattes du bac ou des bacs de l'empilement.

5. Système selon l'une quelconque des revendications 1 à 4, **caractérisé en ce que** ladite patte (41) de verrouillage est formée monobloc avec lesdits bacs.

6. Système selon la revendication 2, **caractérisé en ce que** ledit crochet (31) est formé d'une tige (33) présentant un ergot (34) faisant saillie sur un côté sensiblement à l'extrémité libre de ladite tige.

7. Système selon l'une quelconque des revendications 1 à 6, **caractérisé en ce que** ladite portion inclinée comprend un plan incliné (42).

8. Système selon l'une quelconque des revendications 1 à 7, **caractérisé en ce que** ledit logement de verrouillage (44) présente une courbure en forme d'une branche d'hyperbole, de parabole ou d'une ellipse tronquée.

9. Système selon l'une quelconque des revendications 1 à 8, **caractérisé en ce que** lesdits bacs présentent des butées de guidage (45) en vis-à-vis desdits logement de verrouillage (44) destinées à repousser ledit élément mobile contre ledit logement de verrouillage.

10. Système selon l'une quelconque des revendications 1 à 9, **caractérisé en ce que** lesdits moyens de préhension et de levage comprennent au moins une crémaillère ou une pluralité de câbles solidarisés audit support et des moyens d'actionnement de ladite crémaillère ou desdits câbles pour lever ou abaisser ledit support.

11. Système selon l'une quelconque des revendications 1 à 10, **caractérisé en ce que** le châssis dudit robot présente une ouverture permettant le passage dudit support au travers dudit châssis pour pouvoir soulever un bac ou un empilement de bac du dessus dudit châssis ou vice versa pour déposer un bac ou un empilement dans une colonne sous ledit robot au travers de ladite ouverture.

12. Procédé de préhension par un robot (16) d'un empilement de bacs (14) dans une colonne de stockage (13) d'une installation de stockage comprenant une pluralité de colonnes de stockage (13) agencées suivant une grille, ledit robot opérant au-dessus de ladite grille et comprenant des moyens de préhension et de levage d'au moins un bac comprenant un support mobile, tel qu'un cadre (21, 1101) ou un bras, configuré de sorte à pouvoir coulisser verticalement autour desdits bacs et au moins un élément mobile (31, 1103)par rapport audit support , et de préférence quatre éléments mobiles par rapport audit support entre :
- une position d'équilibre stable dans laquelle l'extrémité inférieure dudit élément mobile n'est soumis à l'action d'aucune poussée horizontale ou la résultante des forces de poussée horizontales s'exerçant sur l'extrémité inférieure dudit élément est nulle ; et
au moins une position hors équilibre, dans laquelle la résultante des forces de poussée horizontales s'exerçant sur l'extrémité inférieure dudit élément mobile est non nulle, et l'extrémité inférieure dudit élément est écartée d'un côté ou de l'autre de sa position dans ladite position d'équilibre,
**caractérisé en ce que** lesdits bacs (14) dudit empilement présentent au moins une patte (41), et de préférence quatre pattes, présentant un logement de verrouillage (44) dudit élément mobile sensiblement tourné vers le bas et une portion inclinée sensiblement tournée vers le haut permettant de repousser l'extrémité libre dudit élément mobile vers l'extérieur dudit bac lorsque ledit support se déplace vers le bas,
ledit procédé comprenant les étapes suivantes :
- déplacement dudit support autour vers le bas autour dudit empilement jusqu'à une hauteur au niveau du bac situé au bas de l'empilement où ledit élément (31, 1103) mobile est engagée dans ledit logement de verrouillage (44) de ladite patte du bac situé au bas de l'empilement ;
- à partir de ladite hauteur, déplacement dudit support vers le haut jusqu'au niveau supérieur de ladite colonne, entrainant le soulèvement dudit empilement et sa sortie de ladite colonne.

## Patentansprüche

1. System (10) zum automatischen Lagern und Auslagern von Produkten, umfassend:
- eine Mehrzahl von Behältern (14), welche dazu vorgesehen sind, die Produkte aufzunehmen;
- eine Anordnung zum Lagern der Behälter (11), umfassend eine Mehrzahl von Lagersäulen (13), welche einem Gitter folgend angeordnet und dazu eingerichtet sind, einen vertikalen Stapel von Behältern aus der Mehrzahl von Behältern aufzunehmen, und
- wenigstens einen Roboter (16), welcher oberhalb des Gitters arbeitet, welcher in der Lage ist, die Behälter zu transportieren und aufzunehmen und in den Säulen abzustellen, wobei der Roboter Mittel zum Greifen und Anheben von wenigstens einem Behälter umfasst, welche einen bewegbaren Träger umfassen, wie beispielsweise ein Gestell (21; 1101) oder einen Arm, welcher derart eingerichtet ist, dass er vertikal um die Behälter herum gleiten kann,
wobei die Mittel zum Greifen und Anheben von wenigstens einem Behälter wenigstens ein Element (31; 1103) umfassen, welches sich im Wesentlichen vertikal erstreckt, welches bewegbar bezüglich des Trägers montiert ist, zwischen:
- einer stabilen Gleichgewichtsposition, in welcher das untere Ende des Elements keiner Wirkung eines horizontalen Schubes ausgesetzt ist oder die Resultierende von horizontalen Schubkräften, welche auf das untere Ende des Elements wirken, null ist; und
- wenigstens einer Außer-Gleichgewichtsposition, in welcher die Resultierende der horizontalen Schubkräfte, welche auf das untere Ende des Elements wirken, nicht null ist, und das untere Ende des Elements zu einer Seite oder der anderen aus seiner Position in der Gleichgewichtsposition verlagert ist,
**dadurch gekennzeichnet, dass** die Behälter wenigstens eine Lasche (41) aufweisen, welche eine Verrieglungsaufnahme (44) für das bewegbare Element in der stabilen Gleichgewichtsposition aufweisen, welche im Wesentlichen nach unten gedreht ist, sowie einen geneigten Abschnitt, welcher im Wesentlichen nach oben gedreht ist, welcher es erlaubt, das untere Ende des bewegbaren Elements zu der Außenseite des Behälters zu schieben, in einer der Außer-Gleichgewichtspositionen, wenn sich der Träger in Richtung nach unten verlagert.

2. System nach Anspruch 1, **dadurch gekennzeichnet, dass** das bewegbare Element ein Haken (31) ist, welcher dazu bestimmt ist, an dem Träger zu hängen, welcher schwenkbar um eine Achse (32) bezüglich des Trägers montiert ist.

3. System nach Anspruch 1, **dadurch gekennzeichnet, dass** das bewegbare Element ein Finger (1103) ist, welcher translatorisch in einer horizontalen Führung geführt ist und mit einer oder mehreren Rückstellfedern in der stabilen Gleichgewichtsposition zusammenwirkt.

4. System nach Anspruch 2, **dadurch gekennzeichnet, dass** die Mittel zum Greifen und Anheben von wenigstens einem Behälter vier Elemente umfassen, welche bewegbar bezüglich des Trägers und der Laschen sind, welche vier Laschen aufweisen, wobei die Laschen die einen bezüglich der anderen derart platziert sind, dass wenn sich der Träger um einen Behälter oder einen Stapel von Behältern herum verlagert, jedes der bewegbaren Elemente im Wesentlichen gegenüber einer der Laschen des Behälters oder der Behälter des Stapels liegt.

5. System nach einem der Ansprüche 1 bis 4, **dadurch gekennzeichnet, dass** die Verriegelungslasche (41) einteilig mit den Behältern gebildet ist.

6. System nach Anspruch 2, **dadurch gekennzeichnet, dass** der Haken (31) durch eine Stange (33) gebildet ist, welche einen Sporn (34) aufweist, welcher an einer Seite im Wesentlichen an dem freien Ende der Stange übersteht.

7. System nach einem der Ansprüche 1 bis 6, **dadurch gekennzeichnet, dass** der geneigte Abschnitt eine geneigte Ebene (42) umfasst.

8. System nach einem der Ansprüche 1 bis 7, **dadurch gekennzeichnet, dass** die Verriegelungsaufnahme (44) eine Krümmung in Form eines Zweigs einer Hyperbel, einer Parabel oder eines Ellipsenstumpfs aufweist.

9. System nach einem der Ansprüche 1 bis 8, **dadurch gekennzeichnet, dass** die Behälter Führungsanschläge (45) gegenüber der Verrieglungsaufnahme (44) aufweisen, welche dazu vorgesehen sind, das bewegbare Element gegen die Verriegelungsaufnahme zu drücken.

10. System nach einem der Ansprüche 1 bis 9, **dadurch gekennzeichnet, dass** die Mittel zum Greifen und Anheben wenigstens eine Zahnstange oder eine Mehrzahl von Kabeln umfassen, welche mit dem Träger und Betätigungsmitteln der Zahnstange oder der Kabel verbunden sind, um den Träger anzuheben oder abzusenken.

11. System nach einem der Ansprüche 1 bis 10, **dadurch gekennzeichnet, dass** der Körper des Roboters eine Öffnung aufweist, welche den Durchgang des Trägers durch den Körper ermöglicht, um einen Behälter oder einen Stapel von Behältern von oberhalb des Körpers anheben zu können, oder andersherum, um einen Behälter oder einen Stapel in einer Säule unter dem Roboter durch die Öffnung abzulegen.

12. Verfahren zum Greifen eines Stapels von Behältern (14) durch einen Roboter (16) in einer Lagersäule (13) einer Lageranordnung, welche eine Mehrzahl von Lagersäulen (13) umfasst, welche einem Gitter folgend angeordnet sind, wobei der Roboter oberhalb des Gitters arbeitet und Mittel zum Greifen und Anheben von wenigstens einem Behälter umfasst, umfassend einen bewegbaren Träger, wie beispielsweise ein Gestell (21, 1101) oder einen Arm, welcher derart eingerichtet ist, dass er vertikal um die Behälter herum gleiten kann, und wenigstens ein bezüglich des Trägers bewegbares Element (31, 1103), und vorzugsweise vier bezüglich des Trägers bewegbare Elemente, zwischen:
- einer stabilen Gleichgewichtsposition, in welcher das untere Ende des bewegbaren Elements keiner Wirkung eines horizontalen Schubes ausgesetzt ist oder die Resultierende von horizontalen Schubkräften, welche auf das untere Ende des Elements wirken, null ist; und
wenigstens einer Außer-Gleichgewichtsposition, in welcher die Resultierende von horizontalen Schubkräften, welche auf das untere Ende des bewegbaren Elements wirken, nicht null ist, und das untere Ende des Elements zu einer Seite oder der anderen aus seiner Position in der Gleichgewichtsposition verlagert ist,
**dadurch gekennzeichnet, dass** die Behälter (14) des Stapels wenigstens eine Lasche (41) aufweisen, vorzugsweise vier Laschen, welche eine Verrieglungsaufnahme (44) für das bewegbare Element aufweisen, welche im Wesentlichen nach unten gedreht ist, sowie einen geneigten Abschnitt, welcher im Wesentlichen nach oben gedreht ist, welcher es erlaubt, das freie Ende des bewegbaren Elements zu der Außenseite des Behälters zu schieben, wenn sich der Träger in Richtung nach unten verlagert,
wobei das Verfahren die folgenden Schritte umfasst:
- Verlagern des Trägers nach unten um den Stapel herum bis zu einer Höhe auf dem Niveau des Behälters, welcher an der Unterseite des Stapels angeordnet ist, wo das bewegbare Element (31, 1103) in der Verriegelungsaufnahme (44) der Lasche des Behälters eingreift, welcher an der Unterseite des Stapels angeordnet ist;
- ausgehend von dieser Höhe, Verlagern des Trägers in Richtung nach oben bis zu dem oberen Niveau der Säule, wodurch das Anheben des Stapels und sein Austreten aus der Säule bewirkt wird.

## Claims

1. An automatic product (10) storage and retrieval system comprising:
- a plurality of bins (10) for receiving said products;
- a storage facility for said bins (11) comprising a plurality of storage columns (13) arranged in a grid and configured to receive a vertical stack of said plurality of bins, and
- at least one robot (16) operating above said grid, capable of transporting said bins and picking up and depositing said bins in said columns, said robot comprising means for gripping and lifting at least one bin comprising a mobile support, such as a frame (21 ; 1101) or an arm, configured so as to be able to slide vertically around said bins,
said means for gripping and lifting at least one bin comprise at least one substantially vertically extending element (341 ; 1103), mounted so as to be movable relative to said support between:
- a stable equilibrium position in which the lower end of said member is not subject to the action of any horizontal thrust or the resultant of the horizontal thrust forces acting on the lower end of said member is zero; and
- at least one out-of-equilibrium position, in which the resultant of the horizontal thrust forces on the lower end of said member is non-zero, and the lower end of said member is displaced to either side of its position in said equilibrium position,
**characterised in that** said bins have at least one lug (41) having a housing for locking (44) said mobile element in said stable equilibrium position, substantially facing down-wards and a tilted portion substantially facing upwards allowing the lower end of said mobile element to be pushed back towards the outside of said bin, in one of said out-of-equilibrium positions, when said support moves downwards.

2. The system according to claim 1, **characterised in that** said movable member is a hook (31) for hanging from said support, pivotally mounted about an axis (32) relative to said support.

3. The system according to claim 1, **characterised in that** said movable element is a finger (1103) guided in translation in a horizontal slide and cooperating with one or more return springs in said stable equilibrium position.

4. The system according to claim 2, **characterised in that** said means for gripping and lifting at least one bin comprises four members movable relative to said support and said lugs (41) have four lugs, said lugs being positioned relative to each other so that when said support moves around a bin or stack of bins each of said movable members is substantially opposite one of said lugs of the bin or bins in the stack.

5. The system according to any one of claims 1 to 4, **characterised in that** said locking lug (41) is formed integrally with said bins.

6. The system according to claim 2, **characterised in that** said hook (31) is formed by a rod (33) having a lug (34) projecting from one side substantially at the free end of said rod.

7. The system according to any one of claims 1 to 6, **characterised in that** said tilted portion comprises a tilted plane (42).

8. The system according to any one of claims 1 to 7, **characterised in that** said locking housing (44) has a curvature in the form of a hyperbolic branch, a parabola or a truncated ellipse.

9. The system according to any one of claims 1 to 8, **characterised in that** said bins have guide stops (45) opposite said lock housings (44) for pushing said movable member against said lock housing.

10. The system according to any one of claims 1 to 9, **characterised in that** said gripping and lifting means comprise at least one rack or a plurality of cables attached to said support and means for actuating said rack or said cables to raise or lower said support.

11. The system according to any one of claims 1 to 10, **characterised in that** the chassis of said robot has an opening allowing passage of said support through said chassis to be able to lift a bin or stack of bins from above said chassis or vice versa to deposit a bin or stack in a column below said robot through said opening.

12. A method of gripping by a robot (16) a stack of bins in a storage column (13) of a storage installation comprising a plurality of storage columns '13) arranged in a grid, said robot operating above said grid and comprising means for gripping and lifting at least one bin comprising a mobile support, such as a frame (21; 1101) or an arm, configured so as to be able to slide vertically around said bins and at least one element movable (31; 1103) with respect to said support, and preferably four elements movable with respect to said support between:
- a stable equilibrium position in which the lower end of said movable member is not subject to the action of any horizontal thrust or the resultant of the horizontal thrust forces acting on the lower end of said member is zero; and
at least one out-of-equilibrium position, in which the resultant of the horizontal thrust forces on the lower end of said movable member is non-zero, and the lower end of said member is moved to either side of its position in said equilibrium position,
**characterised in that** said bins in said stack having at least one, and preferably four, lugs, having a substantially downwardly facing locking housing for said movable member and a substantially upwardly facing tilted portion for pushing the free end of said movable member outwardly of said bin as said support moves downwardly,
said method compring the following steps:
- moving said support around downwardly around said stack to a height at the bottom of the stack where said movable member is engaged in said locking housing of said bottom of the stack bin lug;
- from said height, moving said support up to the upper level of said column, causing said stack to be lifted out of said column.
